# EUROPÄISCHE PATENTANMELDUNG

(11) **EP 1 254 756 A2**
(43) Veröffentlichungstag der Anmeldung: **06.11.2002**
(21) Anmeldenummer: 02001459.3
(22) Anmeldetag: 21.01.2002
(51) Int. Cl.: B29C 47/82

(54) **Geschlossene Zylindertemperierung in der Wand**

(30) Priorität: 21.01.2001 DE 10102609
(71) Anmelder: Milacron Inc., Cincinnati, Ohio 45206 (US)
(72) Erfinder: Krüger, Ernst Dr., 26629 Gro efehn (DE)
(74) Vertreter: Stahlberg, W. J. H.

(57) **Zusammenfassung**

Die Erfindung bezieht sich auf ein Verfahren und eine Vorrichtung zur Extrusion von Kunststoffen, die aus einem Zylindergehäuse (1) und sich darin drehenden Schnecken aufgebaut ist. Die Schnecken sind als Einschnecke oder sich kämmenden Doppelschnecken ausgeführt. Der Zylinder (1) wird im wesentlichen in der erfindungsgeinäßen Ausführung mit sich selbstregulierenden, teilgefüllten und verschlossenen Bohrungen (3) unter Ausnutzung von Siede-/ bzw. Verdampfungs- und Kondensationseffekten temperiert. Hierbei wird die Energie von den heißen zu den kalten Bereichen transportiert.

## Beschreibung

Schnecken zur Verarbeitung von thermoplastischen Kunststoffen sind so aufgebaut, daß entlang der Schneckenlänge unterschiedliche Zonen vorliegen. Es wird zwischen Einund Doppelschnecken unterschieden. Die Doppelschnecken werden in einem Doppelschneckenzylinder geführt. Verfahrenstechnisch werden sie durch den Achsabstand der Doppelschnecken sowie den Durchmesser und die verfahrenstechnische Länge charakterisiert. Der Antrieb erfolgt über ein Reduzier- und ein Verteilgetriebe.

Hauptanforderung einer jeden Schneckenauslegung ist es, die Schneckengeometrien so gestalten, daß zum einen ein großer Durchsatz gefahren und zum anderen eine möglichst weite Rezepturbandbreite verarbeitet werden kann. Die Temperatur der Masse am Austritt des Extruders sollte möglichst gering sein. Dabei spielt die Homogenität der Temperatur ebenfalls eine wichtige Rolle.

Die große Problematik bei der Auslegung liegt darin, daß in Abhängigkeit der Schnekkendrehzahlen teilweise erhebliche Friktionsenergie entsteht, die abgeführt werden muß. Diese Friktionsenergie entsteht insbesondere in der sogenannten Kompessionszone und in der Meteringzone. Während auf der einen Seite das Zuviel an Friktionsenergie abgeführt werden muß, besteht insbesondere im Vorwärmbereich ein ständiger Bedarf an Wärmeenergie

### Stand der Technik

Es ist Stand der Technik, daß bei Doppelschneckenextrudern die Schnecken mit Öl in einem offenen System oder alternativ in einem geschlossenen System temperiert werden

In dem Stand der Technik in DE 40 16 823 A1 sind niedrigschmelzende Metalle als Wärmeträgermedium für beheizbare Walzen aufgeführt. Entsprechende Ausführungen sind jedoch nicht vergleichbar mit den hier dargestellten erfinderischen Lösungen.

In DE 35 40 024 A1 wird ebenfalls die Zylindertemperierung angesprochen. Hierbei geht es jedoch ausschließlich um einen Fertigungsvorteil durch auswechselbare Verbindungskanäle dieser Temperierung von Zylinderschüssen. Die Literatur zeigt sonst keine Zylindertemperierung mit Ähnlichkeiten zu den hier angesprochenen Patentansprüchen 1 + 5.

Bei der Zylindertemperierung ist es Stand der Technik, eine Öl-, Wasser bzw. eine Lufttemperierung einzusetzen. Die Flüssigkeit bzw. die Luft übernimmt die oben beschriebene notwendige Kühlfunktion, während Heizbänder die Heizfunktion übernehmen. Betrachtet man den Wärmebedarf entlang der Zylinderlänge, so zeigt sich, daß im Einzugsund Vorwärmbereich Wärmeenergie benötigt wird, während in den Bereichen der Metering- und der Kompressionszone Wärme abgeführt werden muß. Die drei o. a. Zylindertemperiersysteme haben entscheidende Nachteile.

Eine Öltemperierung ist sehr wartungsintensiv, Ventile "verbrennen" mit der Zeit, Öl vercrackt, Leitungen verstopfen etc., so daß nach einer gewissen Laufzeit mit entsprechendem System häufig große Unzulänglichkeiten auftreten. Die Flüssigkeitstemperiersysteme benötigen zusätzlich einen Wärmetauscher, mit dem die geforderte Regeltemperatur erzeugt wird. Ein Wärmetauscher hat grundsätzlich immer erheblich Verluste. Das System mit der Luftkühlung mit entsprechenden Gebläsen ist zwar deutlich wartungsärmer, jedoch ist die Intensität der Kühlwirkung begrenzt und grundsätzlich wird durch den Luftstrom Staub aufgewirbelt.

Ausgehend von dem vorstehend erläuterten Stand der Technik, besteht die Technik darin, eine Temperierung für Kunststoffverarbeitungszylinder so zu entwickeln bzw. weiterzuentwickeln, daß diese wartungsfrei ist. Ziel ist es außerdem, daß dieses System weitgehend selbstregulierend ist. Das bedeutet, daß bei unterschiedlichen Anforderungen zur Temperierung bzw. zum Wärmetransport, das System selbstoptimierend darauf reagiert, ohne daß von Außen Einstellungen erfolgen müssen.

Diese Aufgabe wird erfindungsgemäß durch die Merkmale des Patentanspruches 1 bzw. 5 gelöst. Vorteilhafte Ausgestaltungen der Erfindungen sind in den Unteransprüchen aufgeführt. In der Zylinderwand sind Längsbohrungen eingebracht, in denen die Wärme von den Bereichen mit Wärmeüberschuß in Bereiche mit Wärmebedarf transportiert wird. Hierzu werden Wärmetransportmedien in den geschlossenen Bohrungen eingesetzt, wobei für den Wärmetransport der Aggregatzustandsübergang des Temperiermediums genutzt wird.

Nachfolgend wird die Erfindung anhand von Zeichnungen näher erläutert.
- Figur 1: Eine Zylindertemperiervorrichtung mit Angabe eines Bereiches mit, Wärmeüberschuß und mit Wärmebedarf
- Figur 2: Eine Zylindertemperiervorrichtung mit Temperierbohrung
- Figur 3: Querschnitt einer Zylindertemperiervorrichtung bei einem Zylinder mit zentrischer Bohrung
- Figur 4: Querschnitt einer Zylindertemperiervorrichtung bei einem Zylinder mit Doppelbohrung

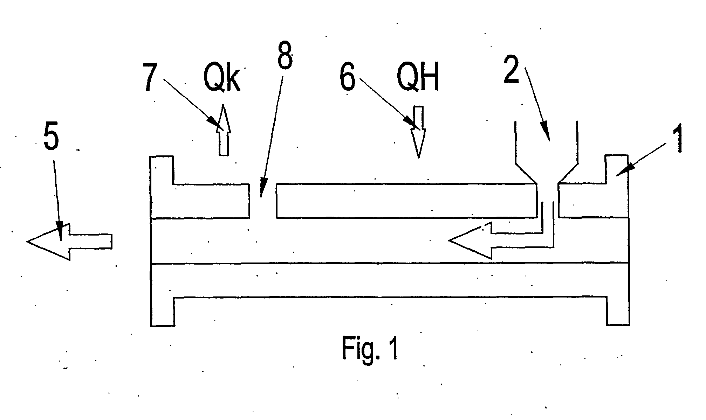

Bei der in Figur 1 dargestellten Vorrichtung ist ein Kunststoffverarbeitungszylinder (1) dargestellt, in dem entsprechende, nicht dargestellte Kunststoffverarbeitungsschnecken den eigentlichen Kunststoff plastifizieren und transportieren. Der Kunststoff wird in Form von Pulver oder Granulat über den Trichter (2) zugeführt und verläßt den Zylinder in der Regel über ein hier nicht dargestelltes Werkzeug an der Anschlußseite (5). Eine Entgasung (8) ist hier exemplarisch aufgeführt, sie muß jedoch nicht zwangsläufig vorhanden sein. Im Vorwärmbereich (6) wird Wärmeenergie QH benötigt, in der Meteringzone (7) muß Wärmeenergie QK abgeführt werden. Mögliche andere Wärmequellen sind nicht aufgeführt.

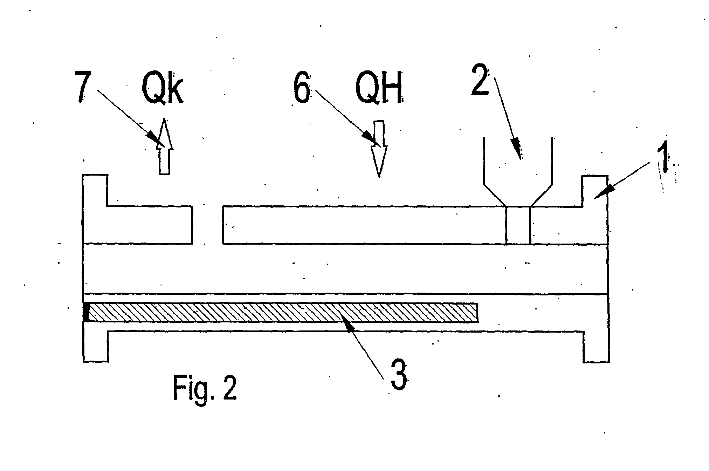

In Fig. 2 ist ein Kunststoffverarbeitungszylinder (1) mit einer entsprechenden Temperierbohrung (3) exemplarisch dargestellt. Es wird im folgenden als Wärmetransportbohrung bezeichnet. In dieser Bohrung (7) ist ein flüssiges Wärmetransportmedium gefüllt, in der Regel teilgefüllt. Das für den Wärmetransport eingesetzte Medium besitzt im allgemeinen einen Siedepunkt zwischen 75°C und 250 °C, der Kondensationsbereich liegt primär zwischen 22°C und 60°C. In Abhängigkeit der zu verarbeitenden Kunststoffe bzw. deren Verarbeitungstemperaturen werden unterschiedliche Wärmetransportmedien eingesetzt. Die Begriffe Sieden und Verdampfen werden nebeneinander benutzt.

In dem in Fig. 2 dargestellten Bereich (7) wird im Zylinder Wärme produziert, die abgeführt werden muß. Diese Wärmeenergie führt bei dem Wärmetransportmedium innerhalb der Wärmetransportbohrung zum Verdampfen. Dieser Zustandübergang, der erhebliche Energie benötigt, führt dazu, daß das Wärmetransportmedium die Energie aufnimmt und somit mit einem wesentlich höheren Energieniveau vorliegt. Innerhalb der Bohrungen (3) entsteht somit ein Bereich, innerhalb von (7), der gefüllt ist mit einem gas-/dampfförmigen Zustand des Wärmetransportmediums und im zweiten Bereich, innerhalb von (6), der einen flüssigen Zustand des Wärmetransportmediums enthält. Durch Druckausgleich wandert der gas-/dampfförmige Anteil zum flüssigen Anteil. Gelangt jedoch der gas/dampfförmige Aggregatzustand in den Bereich, in dem Wärme benötigt wird und der "kalt" ist (6), so entsteht ein Kondensationseffekt. Bei der Kondensation wird die Wärmemenge abgegeben, die vorher zur Verdampfung führte. So entsteht ein Energietransport im Kreislauf.

Unterstützt wird dieser Kreislaufeffekt durch Einbauten in den Bohrungen wie z. B. ein Einbau in Form einer horizontalen Trennwand mit Öffnungen je am Anfang und Ende, hier nicht dargestellt.
Eine leicht schräge Ausführung unterstützt den Kreislaufeffket ebenfalls. Hierbei kann der "flüssige" Anteil in Richtung gasförmiger Anteil wandern.

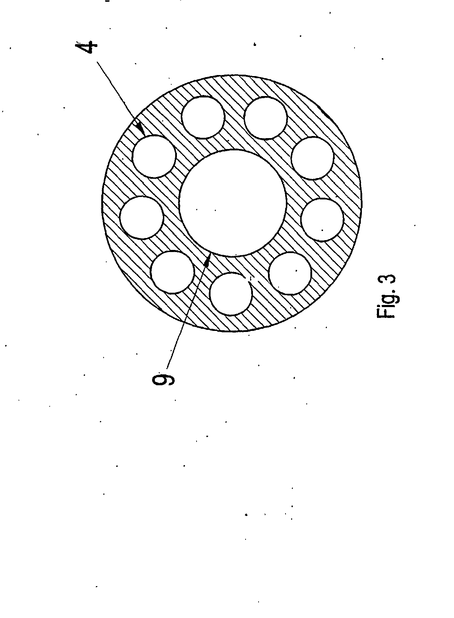

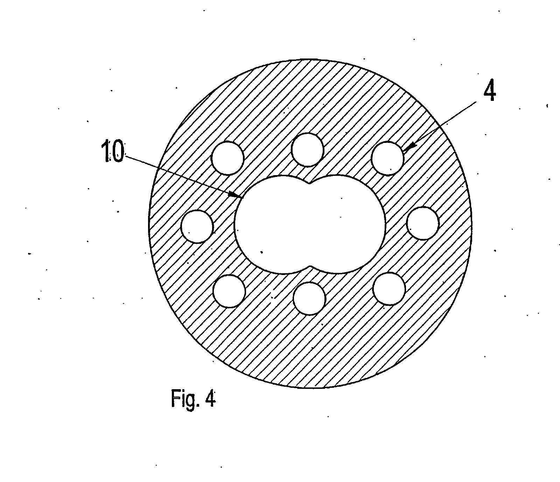

In Fig. 3 und Fig. 4 ist der Querschnitt eines Zylinders mit einer Einfachbohrung und mit einer Doppelbohrung dargestellt. In der Einfachbohrung (9) bzw. der Doppelbohrung (10) läuft eine bzw. laufen zwei Schnecken zum Aufschmelzen und Transportieren von Kunststoffen. Bei diesem Prozeß wird die o. a. Wärme frei bzw. benötigt.

Der Energie- bzw. Wärmetransportkreislauf durchläuft folgende Phasen:
- Phase 1: Es entsteht Wärme im Zylinder. Diese Wärme verdampft (siedet) eine Flüssigkeit in geschlossenen Bohrungen. Durch das Verdampfen wird dem Zylinder Energie entzogen. Die Verdampfungsenergie ist im dampf-/gasförmigen Medium in der Bohrung gespeichert.
- Phase 2: Die Verdampfung erzeugt Druck. Durch Druckausgleich in dem kalten Zylinderbereich, in dem Flüssigkeiten in der Temperierbohrung vorliegt, wird das Gas/der Dampf in diese Bereiche transportiert.
- Phase 3: Das Gas wird in kalte Bereiche des Bohrungssystems transportiert, wo es kondensiert. Bei der Kondensation wird die zuvor gespeicherte Energie an den Zylinder abgeben. Es entsteht ein umgekehrter Zustandsübergang.
- Phase 4: Das "flüssige Medium" wird zu den Bereichen transportiert, in denen der Zylinder heiß ist, um dort wieder in den Verdampfungsprozeß entsprechend Phase 1 einzutreten und den Kreislauf zu schließen.

Der oben beschriebene Prozeß kann direkt in der Bohrung ablaufen oder in einem entsprechenden Einsatz mit einem geschlossenen Hohlraum.

Versuche haben ergeben, das bei diesem System ein sehr deutlicher Selbstregulierungseffekt des Wärmetransports entsteht. Muß mehr Wärme abtransportiert werden, da die Kunststoffmasse im Zylinder heißer geworden ist, so wird mehr flüssiges Medium verdampft, mehr "Verdampfungsenergie" in die Wärmetransportbohrung eingeführt und gleichzeitig im kalten Bereich mehr Medium kondensiert. Hierbei steigt der Druck in der Bohrung und die Strömungsgeschwindigkeit nimmt ebenfalls zu. Die Energietransportgeschwindigkeit paßt sich entsprechend der Höhe der Temperatur selbstregulierend ständig den äußeren Bedingungen an.

Die Ausführungsformen können von dem hier dargestellten Bohrungssystem in Fig. 2 abweichen. Ebenso können diese Temperiersysteme auch außerhalb der Kunststoffverarbeitung Einsatz finden

## Patentansprüche

1. Extruder zur Verarbeitung von Kunststoffen, mit einem Zylinder, dessen mindestens eine zentrale Bohrung ein Längen-/Durchmesserverhältnis von mindestens 15 aufweist, wobei in der Bohrung mindestens eine Verarbeitungsschnecke angeordnet ist, **dadurch gekennzeichnet, dass** der Zylinder mit mindestens zwei Axialbohrungen in der Rohrwand versehen ist, diese Bohrungen bei Raumtemperatur mindestens zu 20 % und maximal zu 85 % mit einer Flüssigkeit gefüllt und druckdicht verschlossen sind, wobei im Betrieb dieses Medium in den Bohrungen einen Energietransport in Axialrichtung des Zylinders erzeugt.

2. Vorrichtung nach Anspruch 1, **dadurch gekennzeichnet, dass** die Flüssigkeit oder das Flüssigkeitsgemisch mit einer Siedetemperatur von 75°C bis 250°C und eine Kondensationstemperatur von 22°C bis 60°C aufweist.

3. Vorrichtung nach Anspruch 1-2, **dadurch gekennzeichnet, dass** die Axialbohrungen Einbauten enthalten, die einen Kreislauf mit stetem Übergang von Gas zu Flüssigkeit bzw. umgekehrt unterstützen.

4. Vorrichtung nach Anspruch 1-3 **dadurch gekennzeichnet, dass** die Flüssigkeit oder das Flüssigkeitsgemisch eine hohe Verdampfungsenergie aufweist.

5. Vorrichtung nach Anspruch 1-5, **dadurch gekennzeichnet, daß** die Förderleistung der Pumpe entsprechend geforderter Verfahrensbedingungen geregelt wird.

6. Verfahren zur Verarbeitung von thermoplastischen Kunststoffen mit Schneckenbzw. Zylindersystemen, **dadurch gekennzeichnet, daß** der Verarbeitungszylinder mit mindestens einem Kreislaufsystem temperiert wird, indem die abzuführende Temperatur durch Verdampfungswärme abgeführt wird und die zuzuführende Temperatur durch Kondensationseffekte zugeführt wird, wobei dieses in einem geschlossenen Kreislaufsystem abläuft.

7. Verfahren nach Anspruch 7, **dadurch gekennzeichnet, daß** das System entsprechend der benötigten bzw. abgegeben Wärmemenge selbstregulierend ist.
